# EUROPÄISCHE PATENTANMELDUNG

(11) **EP 2 209 078 A1**
(43) Veröffentlichungstag der Anmeldung: **21.07.2010**
(21) Anmeldenummer: 09000470.6
(22) Anmeldetag: 15.01.2009
(51) Int. Cl.: G06K 7/14

(54) **Verfahren und tragbares Gerät zum Erkennen von Barcodes**

(71) Anmelder: ETH Zurich, 8092 Zurich (CH)
(72) Erfinder: Adelmann, Robert, 8006 Zürich (CH)

(57) **Zusammenfassung**

Ein Verfahren zum optischen Erfassen eines linearen Barcodemusters und zum Bestimmen einer Symbolfolge, welche durch das Barcodemuster codiert ist, geht von einem unscharfen Rohbild aus und weist die folgenden Schritte auf:
• Aufnehmen eines Rohbildes (6) des Barcodemusters;
• Vorverarbeiten (7) des Rohbildes (6) zur Erzeugung einer Folge von Ausgangsmustern (9);
• Vergleichen (10) der Ausgangsmuster (9) mit gespeicherten Referenzmustern (5), wobei die Referenzmuster (5) jeweils unscharfen Abbildungen von scharfen Nominalmustern (2) entsprechen, und jedem Referenzmuster mindestens ein Symbol zugeordnet ist;
• Bestimmen, für jedes der Ausgangsmuster (9), jeweils dasjenige Referenzmuster (5), welches die grösste Ähnlichkeit mit dem Ausgangsmuster (9) aufweist;
• Ausgeben, Übermittlen oder Speichern der Symbole, welche den bestimmten Referenzmustern (5) entsprechen und entsprechend der Folge der Ausgangsmuster (9), als Symbolfolge.

## Beschreibung

Die Erfindung bezieht sich auf das Gebiet der optischen Erkennung von Barcodes. Sie bezieht sich insbesondere auf ein Verfahren und ein tragbares Gerät zum optischen Erfassen eines linearen Barcodemusters und zum Bestimmen einer Symbolfolge, welche durch das Barcodemuster codiert ist, gemäss dem Oberbegriff der entsprechenden unabhängigen Patentansprüche.

### STAND DER TECHNIK

Verfahren und Geräte zum optischen Erfassen eines linearen Barcodemusters, insbesondere solche, bei denen die tragbaren Geräte Mobiltelefone mit Kameras sind, sind bekannt: Dabei wird in der Regel davon ausgegangen, dass die mit der Kamera aufgenommenen Bilder ausreichend scharf sind, beispielsweise weil die Kamera eine Autofokusfunktion aufweist. Bei günstigeren Kameras mit Fixfocus-Objektiven versagen solche Verfahren jedoch, da die Kameras bei einem Gegenstandsabstand, der für ein ausreichend aufgelöstes Bild eines Barcodes oder Strichcodes erforderlich ist, kein scharfes Bild liefert.

Es bestehen auch Ansätze zur Verarbeitung unscharfer Bilder zur Erkennung von Barcodes. Diese sind beispielsweise aus den folgenden Publikationen bekannt:
- J. Kim and H. Lee, "Joint nonuniform illumination estimation and deblurring for bar code signals," Opt. Express 15, 14817-14837 (2007)
- Ta-Hsin Li, Ke-Shin Lii, "Deblurring Two-Tone Images by A Joint Estimation Approach Using Higher-Order Statistics", Proceedings of the 1997 IEEE Signal Processing Workshop on Higher-Order Statis-tics (SPW-HOS '97), Page: 108, Year of Publication: 1997, ISBN:0-8186-8005-9
- S. Esedoglu, "Blind deconvolution of bar code signals" Inverse Probl. 20, 121-135 (2004).
   Die beschriebenen Verfahren sind jedoch rechenintensiv, so dass beispielsweise Minuten zur Analyse eines Bildes erforderlich sind. Zudem ist die Erkennung bei Bildern in der Qualität, wie sie von einer defokussierten Mobiltelefonkamera geliefert werden, nicht zuverlässig oder überhaupt nicht möglich.

### DARSTELLUNG DER ERFINDUNG

Es ist deshalb Aufgabe der Erfindung, ein Verfahren und ein tragbares Gerät zum optischen Erfassen eines linearen Barcodemusters und zum Bestimmen einer Symbolfolge, welche durch das Barcodemuster codiert ist, zu schaffen, welche die oben genannten Nachteile behebt.

Diese Aufgabe lösen ein Verfahren und ein tragbares Gerät gemäss den entsprechenden unabhängigen Patentansprüchen.

Das Verfahren zum optischen Erfassen eines linearen Barcodemusters und zum Bestimmen einer Symbolfolge, welche durch das Barcodemuster codiert ist, geht von einem unscharfen Rohbild aus und weist die folgenden Schritte auf:
- Aufnehmen eines Rohbildes des Barcodemusters;
- Vorverarbeiten des Rohbildes zur Erzeugung einer Folge von Ausgangsmustern;
- Vergleich der Ausgangsmuster mit gespeicherten Referenzmustern, wobei die Referenzmuster jeweils unscharfen Abbildungen von scharfen Nominalmustern entsprechen, und jedem Referenzmuster mindestens ein Symbol zugeordnet ist;
- Bestimmen, für jedes der Ausgangsmuster, jeweils dasjenige Referenzmuster, welches die grösste Ähnlichkeit mit dem Ausgangsmuster aufweist;
- Ausgeben, Übermitteln oder Speichern der Symbole, welche den bestimmten Referenzmustern entsprechen, entsprechend der Folge der Ausgangsmuster, als Symbolfolge.

Alternativ wird anstelle einer Folge von Ausgangsmustern von einem einzigen Ausgangsmuster ausgegangen. Dieses einzige Ausgangsmuster repräsentiert einen vollständigen Barcode, ohne Unterteilung in einzelne Symbole. Die nachfolgend erklärten Verfahrenabschnitte sind auch auf ein solches Ausgangsmuster, welches eine Folge von mehreren Symbolen entsprechend einem ganzen Barcode abbildet, anwendbar.

Es wird also von einem Bild einer nicht automatisch fokussierenden (oder falsch fokussierten) Kamera ausgegangen, bei dem der zu erkennende Barcode ausserhalb eines Distanzbereiches scharfer Abbildung liegt. Das Bild wird - nach einer Vorverarbeitung - mit **Referenzmustern** verglichen. Jedes Referenzmuster entspricht einer vorzugsweise offline und im Voraus berechneten unscharfen Abbildung eines **Nominalmusters.** Ein Nominalmuster wiederum entspricht einem **Codemuster** oder einem Codemuster mit mindestens einem benachbarten Codemuster. Indem ein Nominalmuster benachbarte Codemuster enthält, lässt sich der Einfluss des benachbarten Codemusters, wie er bei einer unscharfen Abbildung entsteht, berücksichtigen. Ein Codemuster wiederum ist einem Symbol des Codes zugeordnet. Dabei können auch mehrere Codemuster demselben Code zugeordnet sein.

Im allgemein bekannten EAN-Code (European Article Number) oder verwandten Codes wie GTIN (Global Trade Item Number) Codes repräsentiert der Code eine Folge von Ziffern. Die Ziffern entsprechen den oben genannten Symbolen, und jeder Ziffer sind, je nach Kontext, eines oder mehrere Codemuster aus zwei schwarzen Balken und zwei weissen Zwischenräumen zugeordnet.

Zur Erzeugung der Referenzmuster zu den Nominalmustern wird die Unschärfe der Kamera modelliert und die unscharfe Abbildung simuliert. Beispielsweise wird die Unschärfe durch eine "point spreading function" (PSF), also einem zumindest angenäherten Impulsantwort der Kamera modelliert. Diese kann beispielsweise auf einfache Weise experimentell durch Aufnehmen eines schwarzen Punktes auf weissem Hintergrund bestimmt werden.

Die PSF hängt von verschiedenen Parametern ab, insbesondere vom Gegenstandsabstand zwischen der abgebildeten Fläche und der Optik. Vorzugsweise wird daher die PSF für mehrere Gegenstandsabstände bestimmt, und werden für jeden Code mehrere Referenzmuster entsprechend verschiedenen Gegenstandsabständen berechnet und gespeichert. Es liegen vorzugsweise also für jedes der Nominalmuster mehrere gespeicherte Referenzmuster jeweils für unterschiedliche Abbildungsparameter, insbesondere für unterschiedliche Distanzen vor. Beim Vergleichen der Ausgangsmuster mit gespeicherten Referenzmustern werden diejenigen Referenzmuster verwendet, die einer Schätzung der tatsächlichen Abbildungsparameter, z.B. der Distanz entsprechen.

Die Abschätzung des tatsächlichen Gegenstandsabstands geschieht vorzugsweise auch lediglich anhand des Rohbildes oder der Ausgangsmuster. Beispielsweise gibt die Steilheit (der Gradient) der Signale, welche den Schwarz/Weiss-Übergängen im Barcode entsprechen, ein Mass der Defokussierung und damit auch ein Mass für den Gegenstandsabstand. Beispielsweise kann die steilste Flanke in den Ausgangsmustern gesucht werden, und die Steilheit über eine im Voraus ermittelte und gespeicherte Zuordnungsfunktion auf die Distanz oder direkt auf einen Index eines Satzes von korrespondierenden Referenzmustern abgebildet werden.

Alternativ können auch andere Verfahren zur Distanzabschätzung verwendet werden, welche von den erfassten Bildern ausgehen, wie sie beispielsweise für Autofokus-Kameras bekannt sind.

Durch die Unschärfe der Abbildung beeinflussen sich nebeneinander liegende Codemuster gegenseitig. Vorzugsweise wird daher für unterschiedliche Kombinationen von zwei oder mehr nebeneinander liegenden Codemustern jeweils ein eigenes Referenzmuster erzeugt. Beispielsweise werden also für die Ziffer respektive das Symbol "3" (in einer bestimmten Codierung) zehn separate Referenzmuster entsprechend den Symbolpaaren "03", "13", ... bis "93" erzeugt und abgespeichert. Wird neben dem vorangehenden auch noch das nachfolgende Symbol berücksichtigt, so werden 100 separate Referenzmuster "030", "130", "230", ... "031", "131", "231", ... "739", "839", "939", ... erzeugt. In anderen Worten sind die Nominalmuster jeweils aus einem Codemuster entsprechend einem ersten Symbol (Referenzsysmbol) und mindestens einem benachbarten Codemuster entsprechend einem zweiten Symbol oder einem zweiten und einem dritten Symbol zusammengesetzt (Nachbarsymbole). Somit sind auch die aus den Nominalmustern erzeugten Referenzmuster jeweils einem Paar oder einem Tripel von Symbolen zugeordnet.

Es kann das ganze Referenzmuster, entsprechend den zwei oder drei Symbolen, abgespeichert werden, oder es kann nur der interessierende Teil des Referenzmuster, welcher dem interessierenden Symbol entspricht (im obigen Beispiel dem Symbol "3"), gespeichert werden. Ein Teil der Information über das oder die angrenzenden Symbole gelangt durch die unscharfe Abbildung in die Randbereiche dieses interessierenden Teiles des Referenzmuster.

Die Referenzmuster werden vorzugsweise offline ausserhalb eines Mobilgerätes vorausberechnet und dann, zusammen mit den zugeordneten Symbolen, an ein Mobilgerät übertragen und dort zum Mustervergleich verwendet. Vorzugsweise wird ebenfalls Information über die in einem bestimmten Zusammenhang zulässigen Symbolfolgen übermittelt, sei es als Liste von Symbolfolgen oder als Spezifikation eines Wertebereiches. Beispielsweise ist in einem Verkaufsgeschäft bekannt, welche Produktecodes zu erwarten sind, so dass nur diese übermittelt werden. Damit kann die Erkennung beschleunigt und die Zuverlässigkeit weiter verbessert werden.

Es sind also die Referenzmuster jeweils einem Referenzymbol und mindestens einem Nachbarsymbol zugeordnet. Beim Vergleich einer Folge von Ausgangsmustern (entsprechend einer Symbolfolge) mit den Referenzmustern ist dann vorzugsweise nicht nur eine korrekte Zuordnung eines Ausgangsmusters zu einem Referenzmuster und damit auch einem Referenzsymbol gefordert, sondern auch, dass das Nachbarsymbol mit dem Referenzsymbol zum entsprechenden benachbarten Ausgangsmuster übereinstimmt. Umgekehrt kann, wenn das Nachbarsymbol bekannt ist, die Suche nach dem Referenzsymbol eingeschränkt und dadurch beschleunigt werden. Allgemein gesprochen liegt damit ein mehrdimensionales Optimierungsproblem vor, bei dem bei den erkannten Referenzmustern die zugeordneten Symbolpaare oder Symboltripel mit jenen von benachbarten Referenzmustern konsistent sein müssen. Auf dieses Problem sind verschiedene Optimierungsverfahren anwendbar.

In einer bevorzugten Ausführungsform der Erfindung wird die Folge von Ausgangsmustern bei der Erkennung sequentiell abgearbeitet. Dabei werden vorzugsweise die Referenzmuster entsprechender Symbolkombinationen verwendet. Ist beispielsweise als letztes das Symbol "4" erkannt worden, so wird zur Erkennung des nächsten Symbols von den Referenzmustern zu den Symbolpaaren "40", "41", "42", ... bis "49" oder den Symboltripeln "400", "401", "402", ... bis "499" ausgegangen, d.h. diese Referenzmuster werden zuerst oder ausschliesslich mit dem aktuellen Ausgangsmuster verglichen. Dadurch wird der Suchraum eingeschränkt und die Geschwindigkeit und die Qualität der Erkennung beschleunigt.

Der Schritt des Vorverarbeitens weist mindestens den Schritt auf: Erzeugen eines Gesamt-Ausgangsmusters entsprechend einem Helligkeitsverlauf entlang des Barcodemusters, also in die Richtung senkrecht zur Richtung der einzelnen Balken des Barcodes, und Aufteilen des Gesamt-Ausgangsmusters in die Folge von Ausgangsmustern.

Beispielsweise kann das Gesamt-Ausgangsmuster erzeugt werden durch Erzeugen des Helligkeitsverlaufs entlang des Barcodemusters durch Auswahl einer Bildzeile des - optional gedrehten - Rohbildes oder durch Mittelung über mehrere Bildzeilen des Rohbildes.

In einer anderen bevorzugten Ausführungsform der Erfindung wird in der Vorverarbeitung der Helligkeitsverlaufs entlang des Barcodemusters erzeugt durch Durchführen einer Hough-Transformation auf das Rohbild oder einen Ausschnitt des Rohbildes, wodurch eine Häufigkeitsverteilung in einer Abbildungsebene aufgespannt durch Winkel und Abstand (Hough-Raum) entsteht. Der Helligkeitsverlauf wird extrahiert entsprechend der Folge von Werten auf derjenigen Geraden in der Abbildungsebene, welche durch die Maxima in der Abbildungsebene führt und einem konstanten Winkel im Rohbild entspricht. Durch diese Verwendung der Hough-Transformation wird der Helligkeitsverlauf einerseits unabhängig von der Orientierung des Barcodes ermittelt, und andererseits automatisch eine Mittelung von parallelen Helligkeitsverläufen über die ganze Höhe der Balken des Barcodes durchgeführt.

In einer bevorzugten Ausführungsform der Erfindung werden die Schritte vom Aufnehmen des Rohbildes bis zum Bestimmen der erkannten Symbolfolge mehrmals wiederholt, bis eine vorgegebene Anzahl von Ergebnissen miteinander übereinstimmt. Dies geschieht vorzugsweise mit der Bildaufnahmefrequenz oder Videofrequenz der Kamera, zum Beispiel mit 15 oder 30 Bildern/Sekunde.

Das erfindungsgemässe Verfahren findet vorzugsweise Anwendung in Verkaufsräumlichkeiten. Damit kann ein Kunde mit seinem entsprechend vorbereiteten Mobilgerät, typischerweise einem Mobiltelefon mit Kamera, Strichcodes an Produkten und/oder Verkaufsgestellen lesen. Anhand dieser Identifikation von Produkten lässt sich eine Vielfalt von Informationsdienstleistungen realisieren. Diese können allgemeiner Natur oder individuell auf den Benutzer angepasst sein, und können von der Verkaufsorganisation oder auch von Dritten bereitgestellt werden. Information zum Produkt können nebst Preis und Menge beispielsweise Allergikerinformationen, Preisvergleiche mit ähnlichen Angeboten, Informationen von Fair-Trade-, Zertifizierungs- und Konsumentenorganisationen etc. sein. In einer anderen bevorzugten Anwendung der Erfindung wird das Produkt als vom Benutzer ausgewählt erfasst. Unmittelbar oder an einer Checkout-Kasse werden die ausgewählten Produkte dem Verkaufsgeschäft übermittelt, beispielsweise über eine lokale drahtlose Verbindung wie Bluetooth oder WLAN, und darauf basierend wird die Bezahlung getätigt.

Also Grundlage für die beschriebene Anwendung werden in einer bevorzugten Ausführungsform der Erfindung die zu erkennenden Symbolfolgen und entsprechende Referenzmuster bei einer Verkaufsstelle drahtlos an das Mobilgerät übermittelt, optional auch weitere Informationen zu den einzelnen Produkten. Damit kann die Erkennung auf die tatsächlich vorliegenden Produktcodes, die ja nur eine kleine Anzahl der grundsätzlich möglichen Maximalanzahl von beispielsweise EAN-Codes umfassen, eingeschränkt werden. Die Maximalanzahl beträgt beispielsweise 1000 bis 100000 Codes. In einem solchen Fall ist die Verfahrensvariante, in welcher der Barcode als Ganzes, einziges Ausgangsmuster, ohne Unterteilung in mehrere Ausgangsmuster erkannt wird, vorteilhaft anwendbar: Es müssen nur die Referenzmuster zu allen tatsächlich vorliegenden Produktcodes, gegebenenfalls auch mehrfach für unterschiedliche Abbildungsparameter, erzeugt und an das Mobilgerät übermittelt werden.

Zum Vergleichen der Ausgangsmuster und Referenzmuster kann grundsätzlich auf bekannte Verfahren zurückgegriffen werden. In einer anderen, bevorzugten Ausführungsform der Erfindung geschieht der Vergleich, indem die ersten Ableitungen der beiden Muster miteinander verglichen werden, insbesondere, indem die Differenz der Werte der ersten Ableitungen gebildet und aufsummiert wird. Die so berechnete Summe ist ein Mass für die Ähnlichkeit der beiden Muster. In einer bevorzugten Variante dieses Verfahrens wird zusätzlich das Vorzeichen der Ableitung im Bereich der Ränder der Muster verglichen. Unterschiedliche Vorzeichen reduzieren dass Mass für die Ähnlichkeit der Muster. Zusätzlich können auch die Unterschiede der Absolutwerte der Muster aufsummiert werden. Bei allen Varianten können zudem die Muster mehrmals miteinander verglichen werden, und dabei jedesmal um unterschiedliche Werte gegeneinander verschoben werden.

In einer weiteren bevorzugten Variante der Erfindung wird in einem ersten Durchlauf versucht, wie eben beschrieben einen Barcode als Ganzes aus einem einzigen Ausgangsmuster zu erkennen. Nur wenn dies nicht mit einer vorgegebenen Konfidenz gelingt - weil beispielsweise der vorliegende Barcode nicht Teil der Menge erwarteter Barcodes ist - wird das Gesamt-Ausgangsmuster in die Ausgangsmuster unterteilt und wird die Erkennung einzelner Symbole durchgeführt.

Das tragbare Gerät weist eine Kamera und eine Datenverarbeitungseinheit auf, wobei die Datenverarbeitungseinheit zur Ausführung des beschriebenen Verfahrens programmiert ist. Dazu weist sie vorzugsweise Speichermittel mit darin gespeicherten Computerprogrammcodemitteln auf, welche ein Computerprogramm beschreiben, wobei die Ausführung des Computerprogramms durch die Datenverarbeitungseinheit zur Durchführung des Verfahrens führt.

Das Computerprogramm zum optischen Erfassen eines linearen Barcodemusters und zum Bestimmen einer Symbolfolge, welche durch das Barcodemuster codiert ist, ist in einen internen Speicher einer digitalen Datenverarbeitungseinheit ladbar und weist Computerprogrammcodemittel auf, welche, wenn sie in einer digitalen Datenverarbeitungseinheit ausgeführt werden, diese zur Ausführung des erfindungsgemässen Verfahrens bringen. In einer bevorzugten Ausführungsform der Erfindung weist ein entsprechendes Computerprogrammprodukt einen Datenträger, respektive ein computerlesbares Medium auf, auf welchem die Computerprogrammcodemittel gespeichert sind.

Weitere bevorzugte Ausführungsformen gehen aus den abhängigen Patentansprüchen hervor. Dabei sind Merkmale der Verfahrensansprüche sinngemäss mit den Vorrichtungsansprüchen kombinierbar und umgekehrt.

### KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Es zeigen:
Figur 1 den Zusammenhang zwischen den verarbeiteten Informationen;
Figur 2 eine unscharfe Abbildung eines Barcodes;
Figur 3 einen Helligkeitsverlauf entlang eines Barcodes;
Figur 4 beispielhafte Ausgangsmuster und damit identifizierte Referenzmuster;
Figur 5 ein Flussdiagramm des Verfahrens; und
Figur 6 ein Mobilgerät.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

Es wird von einem Codierungssystem an sich bekannter Art ausgegangen: Einem Symbol, beim EAN-Code einer Ziffer, können je nach Zusammenhang verschiedene Codes oder Codemuster zugeordnet sein. Beispielsweise kann eine Ziffer durch eine bestimmte Bitfolge (wie 0111011, entsprechend der Schwarz/Weiss-Folge im Barcode) codiert sein, oder durch dieselbe Bitfolge, aber rückwärts (1101110), oder durch die komplementäre Bitfolge (1000100), oder rückwärts und komplementär (0010001). Die letzten beiden Varianten sind im EAN-Code als R-Code und G-Code bekannt.

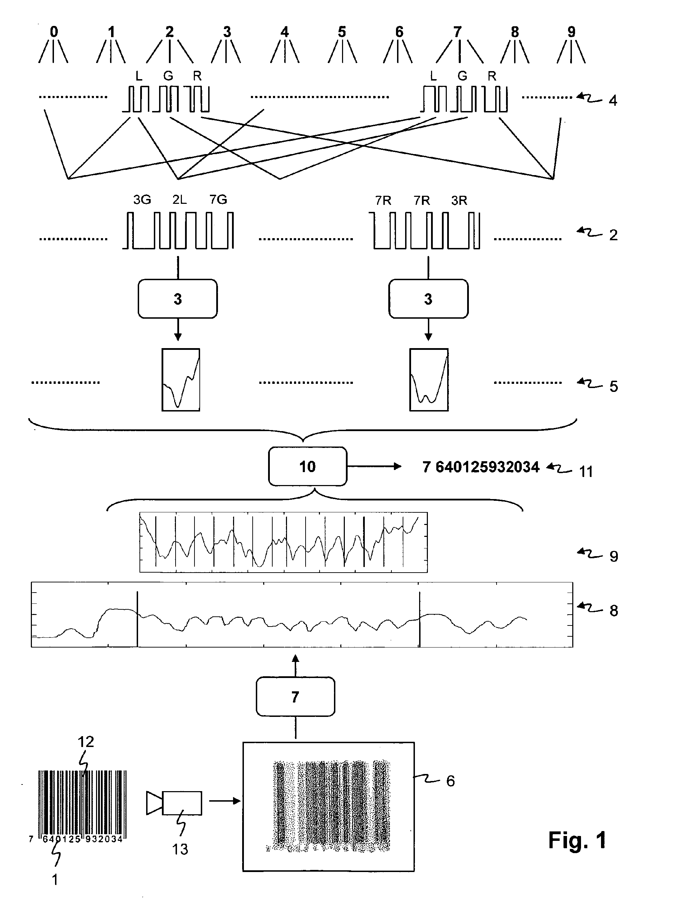

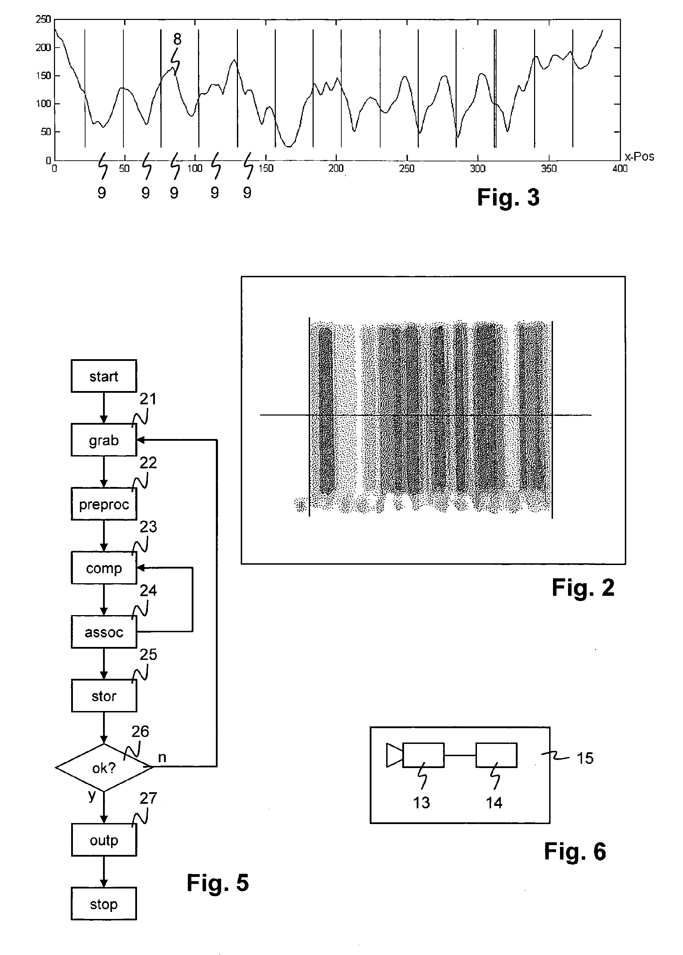

**Figur 1** zeigt den Zusammenhang zwischen den gemäss der Erfindung zur Barcodeerkennung verarbeiteten Informationen. Ziel ist, aus einem unscharfen Rohbild 6 (siehe auch **Figur 2****)** eines Barcodes 12, erstellt durch eine Kamera 13, die dem Barcode zugrunde liegende ursprüngliche Symbolfolge 1 zu extrahieren. Durch eine Vorverarbeitung 7 wird aus dem Rohbild 6 ein Gesamt-Ausgangsmuster 8 (siehe auch **Figur 3****)** erzeugt. Dieses entspricht im Wesentlichen einem Helligkeitsverlauf entlang des Barcodes. Der Helligkeitsverlauf kann entlang einer einzelnen Linie senkrecht zu den Balken des Barcodes im Rohbild 6 bestimmt werden, oder durch Mittelung über mehrere solcher Linien. Bei Verdrehungen und Verzerrungen des Rohbildes 6 können diese in an sich bekannter Weise kompensiert werden, bevor das Gesamt-Ausgangsmuster 8 extrahiert wird. Beispielsweise kann dazu die Hough-Transformation verwendet werden.

Das Gesamt-Ausgangsmuster 8 wird gemäss der **Figur 3** in einzelne Ausgangsmuster 9 unterteilt. Dazu wird vorzugsweise a-priori-Wissen über die Struktur der Codierung verwendet, beispielsweise, dass es sich um einen EAN-8 oder EAN-13 (UPC-12) Barcode handelt, dass die Codes für alle Symbole gleich breit sind und aus vier abwechselnd schwarzen und weissen Balken bestehen, und dass bekannte Start- und End-Muster vorliegen.

In der Figur 1 ist beispielhaft zwischen zwei senkrechten Linien ein Gesamt-Ausgangsmuster 8 als Ausschnitt von rund 400 Pixeln aus einem Helligkeitsverlauf mit einer Länge von ca. 650 Pixeln gezeigt. Darüber sind aneinandergereihte Ausgangsmuster 9 mit einer Gesamtbreite von ca. 400 Pixeln gezeigt (Die beiden Muster stammen von verschiedenen Aufnahmen). Die horizontale Achse gibt jeweils die Anzahl Pixel wieder, die vertikale die Helligkeit. In der **Figur 3** sind noch einmal und vergrössert die aneinandergereihten Ausgangsmuster 9 mit den dazwischenliegenden Grenzen (senkrechte Striche) gezeigt. In der Figur 2 ist eine unscharfe Aufnahme eines Barcodes gezeigt, mit automatisch erkannten Endbegrenzungslinien (senkrechte Striche) und einer horizontalen Linie, entlang welcher der Helligkeitsverlauf bestimmt wird.

Die Ausgangsmuster 9 werden vorzugsweise in einem Mobilgerät 15 in einem Mustervergleich 10 mit Referenzmustern 5 verglichen, um ein erkannte Symbolfolge 11 zu rekonstruieren, welche mit der ursprünglichen Symbolfolge 1 identisch sein soll. Im Folgenden wird zunächst das Erzeugen der Referenzmuster 5 und anschliessend der Mustervergleich 10 beschrieben, wieder mit Bezug auf **Figur 1****:**

Jedem der Symbole, im vorliegenden Beispiel Ziffern von 0 bis 9 (oberste Zeile von **Figur 1****),** ist mindestens ein Codemuster zugeordnet. Hier sind es beispielhaft drei Codemuster 4 je Symbol, wie dies vom EAN-Code her bekannt ist. Diese werden L-, G- und R-Code genannt. Beispielhaft sind in der **Figur 1** in der zweiten Zeile die drei Codemuster 4 für die Ziffern 2 und 7 eingezeichnet, die übrigen Codemuster 4 sind durch Punkte angedeutet. In einer ersten Zifferngruppe des 13-stelligen EAN-Codes (es gibt zwei Zifferngruppen, eine links eines Trenn-Musters in der Mitte und eine rechts davon) können nur L-Codes und G-Codes vorliegen, also insgesamt zwanzig Codemuster, in einer zweiten Zifferngruppe ausschliesslich R-Codes, also nur zehn Codemuster. Die erste und die letzte Ziffer eine Zifferngruppe schliesst an einen Start- oder einen Stop-Code an. Für jede Ziffer werden, entsprechend den möglichen Nachbarn, alle Kombinationen unter Variation der beiden Nachbarn gebildet. Für jede Ziffer in der ersten Zifferngruppe sind dies also 20*20=400 (also unter der Annahme, dass einer der Nachbarn der Ziffer bekannt ist) Kombinationen, für jede Ziffer am Rand der ersten Zifferngruppe zwanzig Kombinationen, für jede Ziffer in der zweiten Zifferngruppe 10*10=100 Kombinationen, und für jede Ziffer am Rand der zweiten Zifferngruppezehn Kombinationen.

Jede dieser Kombinationen von Codemustern 4 ergibt ein Nominalmuster 2. Die Vielzahl von Nominalmustern 2 ist in der dritten Zeile der **Figur 1** durch zwei Kombinationen beispielhaft repräsentiert. Aus den Nominalmustern 2 werden durch eine Simulation der unscharfen optischen Abbildung 3 die Referenzmuster 5 berechnet. Dazu wird vorzugsweise eine (insbesondere auf eine Dimension reduzierte) PSF der Abbildung 3 verwendet und mit den Nominalmustern 2 gefaltet. Die Referenzmuster 5 können auf einen Abschnitt entsprechend einem interessierenden Symbol reduziert werden. Wenn also beispielsweise die benachbarten Symbole, wie in der Figur 1 gezeigt, für die Simulation der Unschärfe mit einbezogen werden, können die linken und rechten Drittel nach der unscharfen Abbildung 3 abgeschnitten werden, so dass das Referenzmuster nur noch das mittlere Drittel enthält. Das Referenzmuster 5 repräsentiert in diesem Fall also nur ein Symbol, jedoch mit dem Einfluss der benachbarten Symbole.

Über die Zuordnung der Referenzmuster 5 und der Nominalmuster 2 zu den Kombinationen von Codemustern 4 und die Zuordnung von den Codemustern 4 zu den Symbolen sind auch die Nominalmuster 2 jeweils einem Tripel von Symbolen zugeordnet. (Falls, in einer vereinfachten Ausführungsform der Erfindung, angrenzende Codemuster nicht berücksichtigt würden, wäre jedem Nominalmuster 2 genau ein Symbol zugeordnet).

Die Berechnung der Referenzmuster 5 geschieht vorzugsweise offline im voraus, unter Simulation verschiedener Gegenstandsabstände und gegebenenfalls für verschiedene Kameratypen.

In einer bevorzugten Ausführungsform der Erfindung sind die so entstehenden ggf mehrere tausend Referenzmuster 5 in Form einer Bilddatei abgelegt. Dabei wird jedes Referenzmuster 5 beispielsweise durch einen Bildausschnitt mit 30 Bildpunkten (Pixel) repräsentiert. In einem Bild von beispielsweise ca. 1056 mal 421 Pixeln lassen sich somit sämtliche Referenzmuster 5 für einen EAN-13-Code bei einem bestimmten Gegenstandsabstand abspeichern. Da ein Bild drei Farbkanäle und evtl. noch einen Alphakanal aufweisen kann, und die Referenzmuster 5 nur monochrom sind, können mehrere Sätze von Referenzmustern in Form eines einzigen Bildes übertragen werden. Dies hat den Vorteil, dass bestehende Verfahren zur (verlustfreien) Kompression und zur Übertragung von Bildern an Mobilgeräte mit Kameras verwendet werden können.

Beim Mustervergleich 10, vorzugsweise im Mobilgerät 15, wird nun beispielsweise ausgehend von einem Rand des Barcodes 12 sequentiell vorgegangen und unter Verwendung von Information über den Aufbau eines Barcodes sowie Information über bereits erkannte Symbole die Suche nach dem nächsten optimal passenden Symbol eingeschränkt und dadurch beschleunigt. Dabei ist es grundsätzlich auch möglich, bei Inkonsistenz eines Symbols mit einem erwarteten Symbol die Zuordnung des zuletzt erkannten Symbols zu revidieren. Optional kann die Suche auch durch Information über die im aktuellen Kontext zulässigen Symbolfolgen eingeschränkt werden.

Wenn also beispielsweise in einem ersten Ziffernblock eines EAN-13-Codes zu einem ersten Ausgangsmuster 9 ein Symbol als die Ziffer "7", codiert im L-Code, identifiziert wurde, so wird für das nachfolgende Ausgangsmuster 9 ausschliesslich oder zumindest zuerst der Satz von 400 Referenzmustern 5 verwendet (d.h. mit dem Ausgangsmuster 9 verglichen) der zur Ziffer "7", codiert im L-Code, gehört. In einer bevorzugten Variante der Erfindung wird zudem die Suche mit denjenigen Referenzmustern 5 begonnen, deren zugeordnetes mittleres Symbol dem erwarteten nachfolgenden Symbol aus dem Mustervergleich 10 des ersten Ausgangsmusters 9 gleich ist.

Für den bekannten EAN-13 Code wird bei der Erkennung der einzelnen Symbole also auch erkannt, ob die Symbole jeweils im L- oder im G-Code codiert sind, und entsprechend der Folge von diesen Codierungsarten wird in bekannter Weise die ersteStelle respektive ein weiteres Symbol der Symbolfolge 1 decodiert.

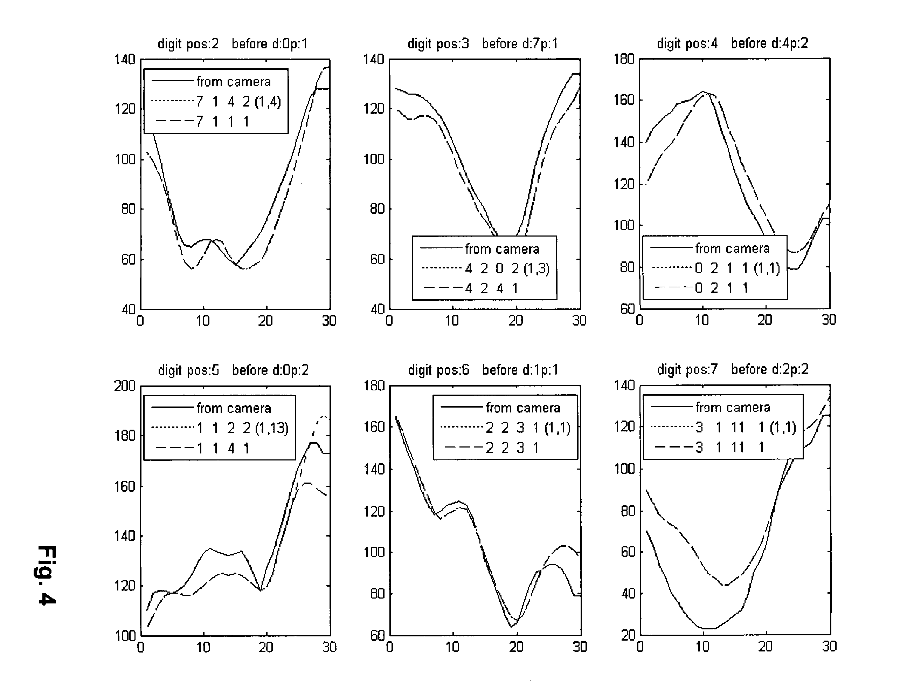

**Figur 4** zeigt beispielhafte Ausgangsmuster 9 und damit identifizierte Referenzmuster. Die durchgezogenen Signalverläufe zeigen jeweils das aus dem Kamerabild extrahierte Ausgangsmuster 9. Die strichlierten Verläufe zeigen jeweils das Referenzmuster, welches dem Ausgangsmuster 9 zugeordnet wurde. Die punktierten Verläufe, welche in fast allen Fällen mit den Referenzmustern übereinstimmen, geben zu Vergleichszwecken die korrekten Referenzmuster wieder. Es sind sechs Gruppen aus einer längeren Serie von Mustern wiedergegeben. Jede Gruppe von Mustern ist rund 30 Pixel lang und ist einer Stelle der Symbolsequenz zugeordnet. Der Titel zu einer Gruppe von Mustern gibt mit "digit pos:" die Position des Symbols in der Sequenz wieder, und das vorher erkannte Symbol der Sequenz mit "before d:" und die Codierung (auch "Parität" genannt) des vorher erkannten Symbols mit "p:", dargestellt durch die Werte 1 und 2 für die L oder G-Codierung. Die Ziffern in der Legende in jeder Gruppe von Mustern respektive jedem Symbol der Folge geben jeweils an:
- in der ersten Zeile: die korrekte oder ideale Ziffer und Codierung des Symbols (im ersten Beispiel: 7 und 1), dann die korrekte Ziffer und Codierung des nächsten Symbols (im ersten Beispiel: 4 und 2). Diese Werte liegen natürlich nur in einer Testumgebung vor, in welcher die zu identifizierende Codesequenz bekannt ist. Ferner gibt die zweite der in Klammern stehenden Ziffern an, an welcher Stelle der nach Ähnlichkeit mit dem Ausgangsmuster 9 sortierten Referenzmuster 5 sich das korrekte Referenzmuster 5 befindet (im ersten Beispiel an vierter Stelle; in dritten, fünften und sechsten Beispiel an erster Stelle, was also eine perfekte Erkennung bedeutet; im vierten Beispiel hingegen an dreizehnter Stelle).
- in der zweiten Zeile: die Ziffer und Codierung des gemäss dem vorliegenden Verfahren erkannten Symbols (im ersten Beispiel: 7 und 1), dann die erwartete Ziffer und Codierung des nächsten Symbols (im ersten Beispiel: 1 und 1, was in diesem Fall einer falschen Schätzung entspricht).
   Der Vergleich der zweiten und dritten Zeile zeigt, dass die Erkennung der Symbole für alle Positionen in der Sequenz korrekt ist und nur in den geschätzten Werten für das nächste Symbol zum Teil nicht korrekt ist.

**Figur 5** zeigt ein Flussdiagramm des Verfahrens. Darin bezeichnet
- ein erster Schritt 21 "grab" das Aufnehmen des Rohbildes 6 mittels der Kamera 13;
- ein zweiter Schritt 22 "preproc" das Vorverarbeiten 7 des Rohbildes 6 zur Erzeugung der Folge von Ausgangsmustern 9;
- ein dritter Schritt 23 "comp" das Vergleichen 10 der Ausgangsmuster 9 mit gespeicherten Referenzmustern 5
- ein vierter Schritt 24 "assoc" das Bestimmen, für jedes der Ausgangsmuster 9, des optimal zugeordneten Referenzmuster 5;
- ein fünfter Schritt 25 "stor" das Ausgeben, Übermittlen oder Speichern der Symbole, welche den bestimmten Referenzmustern 5 entsprechen.

Der dritte und der vierte Schritt 23, 24 können, wenn die Ausgangsmuster 9 nacheinander verarbeitet werden, iterativ wiederholt werden. Für Fälle, in denen die ersten bis fünften Schritte wiederholt ausgeführt werden, bis ein vorgegebenes Abbruchkriterium erfüllt ist, wird im fünften Schritt jeweils das Resultat eines Durchgangs gespeichert, und anschliessend ein weiterer Schritt 26 "ok?" zur Kontrolle des Abbruchkriteriums durchgeführt. Ist das Abbruchkriterium erfüllt (y), wird in einem Ausgabeschritt 27 "outp" das Resultat ausgegeben, gespeichert oder übermittelt, und anschliessend das Verfahren beendet. Andernfalls (n) werden die Schritte mit einer neuen Aufnahme des Rohbildes 6 wiederholt.

Figur 6 zeigt schematisch ein Mobilgerät 15 mit einer Kamera 13 und einer Datenverarbeitungseinheit 14. Die Datenverarbeitungseinheit 14 ist dazu programmiert, die Erkennung ausgehend von einerseits den gespeicherten Referenzmustern 5 und andererseits einem oder einer Folge von Rohbildern 6 durchzuführen.

### BEZUGSZEICHENLISTE

- 1: Symbolfolge
- 2: Nominalmuster
- 3: unscharfe Abbildung
- 4: Codemuster
- 5: Referenzmuster
- 6: Rohbild
- 7: Vorverarbeitung
- 8: Gesamt-Ausgangsmuster
- 9: Ausgangsmuster
- 10: Mustervergleich
- 11: erkannte Symbolfolge
- 12: Barcode
- 13: Kamera
- 14: Datenverarbeitungseinheit
- 15: Mobilgerät

## Patentansprüche

1. Verfahren zum optischen Erfassen eines linearen Barcodemusters und zum Bestimmen einer Symbolfolge, welche durch das Barcodemuster codiert ist, **dadurch gekennzeichnet, dass** das Verfahren von einem unscharfen Rohbild ausgeht und die folgenden Schritte aufweist:
• Aufnehmen eines Rohbildes (6) des Barcodemusters;
• Vorverarbeiten (7) des Rohbildes (6) zur Erzeugung eines einzigen Ausgangsmusters (8) oder einer Folge von Ausgangsmustern (9);
• Vergleichen (10) der Ausgangsmuster (9) oder des einzigen Ausgangsmusters (8) mit gespeicherten Referenzmustern (5), wobei die Referenzmuster (5) jeweils unscharfen Abbildungen von scharfen Nominalmustern (2) entsprechen, und jedem Referenzmuster mindestens ein Symbol zugeordnet ist;
• Bestimmen, für das einzige Ausgangsmuster (8) oder für jedes der Folge von Ausgangsmustern (9), jeweils desjenigen Referenzmusters (5), welches die grösste Ähnlichkeit mit dem Ausgangsmuster (9) aufweist;
• Ausgeben, Übermittlen oder Speichern der Symbole, welche den bestimmten Referenzmustern (5) entsprechen, entsprechend dem einzigen Ausgangsmuster (8) oder der Folge der Ausgangsmuster (9), als Symbolfolge.

2. Verfahren gemäss Anspruch 1, **dadurch gekennzeichnet, dass** der Schritt des Vorverarbeitens (7) mindestens den Schritt aufweist:
• Erzeugen eines Gesamt-Ausgangsmusters (8) entsprechend einem Helligkeitsverlauf entlang des Barcodemusters, und Aufteilen des Gesamt-Ausgangsmusters (8) in die Folge von Ausgangsmustern (9).

3. Verfahren gemäss Anspruch 2, **dadurch gekennzeichnet, dass** der Schritt des Vorverarbeitens (7) mindestens den Schritt aufweist:
• Erzeugen des Helligkeitsverlaufs entlang des Barcodemusters durch Auswahl einer Bildzeile des Rohbildes (6) oder durch Mittelung über mehrere Bildzeilen des Rohbildes (6).

4. Verfahren gemäss Anspruch 2, **dadurch gekennzeichnet, dass** der Schritt des Vorverarbeitens (7) mindestens den Schritt aufweist:
• Erzeugen des Helligkeitsverlaufs entlang des Barcodemusters durch Durchführen einer Hough-Transformation auf das Rohbild (6) oder einen Ausschnitt des Rohbildes (6), wodurch eine Häufigkeitsverteilung in einer Abbildungsebene aufgespannt durch Winkel und Abstand entsteht, Extraktion des Helligkeitsverlaufs entsprechend der Folge von Werten auf derjenigen Geraden in der Abbildungsebene, welche durch die Maxima in der Abbildungsebene führt und einem konstanten Winkel entspricht.

5. Verfahren gemäss einem der bisherigen Ansprüche, wobei für jedes der Nominalmuster (2) mehrere gespeicherte Referenzmuster (5) jeweils für unterschiedliche Abbildungsparameter vorliegen; und beim Vergleichen (10) der Ausgangsmuster (9) mit gespeicherten Referenzmustern (5) ein Satz mit denjenigen Referenzmustern (5) verwendet wird, welcher einer Schätzung dieser Abbildungsparameter entspricht.

6. Verfahren gemäss Anspruch 5, wobei die unterschiedlichen Abbildungsparameter unterschiedlichen Gegenstandsabständen entsprechen.

7. Verfahren gemäss Anspruch 6, wobei eine Abschätzung des Gegenstandsabstands oder eine Auswahl des verwendeten Satzes von Referenzmustern (5) anhand eines Masses für die Unschärfe des Rohbildes (6) geschieht.

8. Verfahren gemäss Anspruch 7, wobei das Mass für die Unschärfe des Rohbildes (6) ein Maximum des Helligkeitsgradienten bei Schwarz-Weiss-Übergängen im Rohbild (6) oder in den Ausgangsmustern (9) ist.

9. Verfahren gemäss einem der bisherigen Ansprüche, wobei die Referenzmuster (5) jeweils einem Referenzymbol und mindestens einem Nachbarsymbol zugeordnet sind, und wobei beim Vergleich einer Folge von Ausgangsmustern (9) mit den Referenzmustern (5), nicht nur eine korrekte Zuordnung eines Ausgangsmusters (9) zu einem Referenzmuster (5) und damit auch einem Referenzsymbol gefordert ist, sondern auch mindestens ein Nachbarsymbol mit dem Referenzsymbol zu einem benachbarten Ausgangsmuster (9) übereinstimmen muss.

10. Verfahren gemäss Anspruch 8, wobei beim Vergleich einer Folge von Ausgangsmustern (9), nachdem ein erstes Ausgangsmuster (9) einem Referenzsymbol zugeordnet wurde, bei einem benachbarten Ausgangsmuster (9) die Menge der zur Auswahl stehenden Referenzmuster (5) auf diejenigen Referenzmuster (5) eingeschränkt wird, deren zugeordnetes Nachbarsymbol gleich dem Referenzsymbol zum ersten Ausgangsmuster (9) ist.

11. Verfahren gemäss einem der bisherigen Ansprüche, wobei die Schritte vom Aufnehmen des Rohbildes (6) bis zum Bestimmen der erkannten Symbolfolge (11) mehrmals wiederholt wird, bis eine vorgegebene Anzahl von Ergebnissen miteinander übereinstimmt.

12. Verfahren gemäss einem der bisherigen Ansprüche, aufweisend den Schritt, dass zu erkennende Symbolfolgen und entsprechende Referenzmuster bei einer Verkaufsstelle drahtlos an ein tragbares Gerät (15) übermittelt werden, und das tragbare Gerät (15) das Verfahren gemäss einem der bisherigen Schritte ausführt.

13. Tragbares Gerät (15) zum optischen Erfassen eines linearen Barcodemusters und zum Bestimmen einer Symbolfolge, welche durch das Barcodemuster codiert ist, aufweisend eine Kamera und eine Datenverarbeitungseinheit (14), **dadurch gekennzeichnet, dass** die Datenverarbeitungseinheit (14) zur Ausführung des Verfahrens gemäss mindestens einem der bisherigen Ansprüche programmiert ist.

14. Computerprogramm zum optischen Erfassen eines linearen Barcodemusters und zum Bestimmen einer Symbolfolge, welche durch das Barcodemuster codiert ist, wobei das Computerprogramm auf einer Datenverarbeitungseinheit 14 ladbar und ausführbar ist, und welches bei der Ausführung das Verfahren nach einem oder mehreren der Ansprüche 1 bis 12 ausführt.
